# EUROPEAN PATENT APPLICATION

(11) **EP 2 103 377 A1**
(43) Date of publication of application: **23.09.2009**
(21) Application number: 08425164.4
(22) Date of filing: 17.03.2008
(51) Int. Cl.: B23Q 17/00

(54) **Method and apparatus for checking proper clamping of workpieces in a CNC machine**

(71) Applicant: Walvoil S.p.A., 42100 Reggio Emilia (IT)
(72) Inventor: Fossi, Stefano, 42100 Reggio Emilia (IT); Menozzi, Luca, 42100 Reggio Emilia (IT)
(74) Representative: Guareschi, Antonella

(57) **Abstract**

The present invention concerns the art of CNC machining of mechanical parts.

More particularly, it relates to a method for deterministically and continuously checking proper clamping of workpieces mounted on the machining fixtures and prevent machining of incorrectly positioned workpieces, which might generate waste parts and cause damages to the CNC machine due to impacts.

Such apparatus and method for checking proper clamping of workpieces provide, instead of typical prior art mechanical detection of pressure in the hydraulic clamping circuit, direct pressure measurement by wireless pressure transmitters capable of detecting and continuously transmitting pressure information to the CNC machine in hidden time.

## Description

The present invention concerns the art of CNC machining of mechanical parts.

More particularly, it relates to a method and an apparatus for deterministically and continuously checking proper clamping of workpieces mounted on the clamping fixtures and prevent machining of incorrectly positioned workpieces, which might generate waste parts and cause damages to the CNC machine due to impacts.

CNC machines generally machine multiple worpieces at the same time; simultaneous machining of multiple workpieces is allowed by the use of machining fixtures or pallets.

Machining fixtures or pallets generally comprise a steel cube having suitable clamping fixtures (such as vises) attached to its faces; clamping fixtures are used to firmly hold the workpieces in a well-determined position.

The workpieces may be clamped either manually, by a machine operator, or hydraulically, using a pressure oil circuit formed within the machining fixture.

Recent trends towards automation have increasingly led to hydraulic clamping, both because it does not require the presence of operators on the machine, replaced by robotized systems, and because it ensures higher repeatability of the clamping force applied.

Proper clamping of mechanical workpieces by the machining fixture is critical to prevent both the generation of waste pieces and damages to the CNC machine: an improperly clamped workpiece might be hit by the tools on the machine spindle, due to its wrong position.

Impacts between the CNC machine and the workpieces are a serious drawback for production, both because of the high costs required for recovery of proper CNC machine operation and for the long machine down times that affect productivity.

For these reasons, hydraulic clamping fixtures are sometimes equipped with systems for checking proper clamping of workpieces.

Proper clamping of workpieces is checked by determining whether the pressure detected at a certain point of the hydraulic clamping circuit is above a threshold or not; this threshold may vary according to the specific fixtures.

In a typical prior art solution, this check is performed by a mechanical system which is based on the detection of the position of a cylinder stem; the stem position is defined by the pressure in the hydraulic clamping circuit.

Prior to machining of the workpieces mounted to the fixture, the CNC machine uses a tracer tool to detect the stem position and machining does not start if such position is not correct; this check might also be repeated during machining but, since it does not occur in hidden time, it is a common practice to minimize the frequency of checks to maximize the machining time of the CNC machine.

This system for checking proper clamping of workpieces suffers from a number of drawbacks.

A first drawback is that machining of workpieces occurs in a very harsh environment and the presence of liquid coolant and chips, being cause of dirt, can affect the reliability of displacement of the cylinder stem and thence the reliability of its detected position.

A second drawback is that the pressure in the hydraulic clamping circuit might change, for various reasons, even during workpiece machining: therefore, by checking the position of the cylinder stem before machining and setting a minimal or zero frequency of checks during machining, there is no guarantee that the workpiece will constantly be in the proper position and that impacts will not occur.

The last drawback is that the cylinder stem position check by the tracer tool is not performed in hidden time but in real time: this means that the time required by each check, i.e. a certain number of seconds, is subtracted from the machining time of the CNC machine, therefore a smaller number of parts are produced.

Another prior art solution that utilizes the above principle (i.e. a mechanical system based on the detection of the position of a cylinder stem as determined by the pressure in the hydraulic clamping circuit) consists in continuously checking the pressure of a chamber of known volume, as defined by the position of the stem, using a pneumatic circuit integrated in the machining fixtures and receiving power from the CNC machine base.

This type of solution obviates the second and third drawback of the previous solution but, besides being unable to solve the problem associated with the reliability of cylinder stem displacement and the reliability of the detected position, it generates two additional problems.

One of these derives from a typical characteristic of pneumatic circuits which, due to the intrinsic properties of the fluid they use (air), work at low pressure and are influenced by the conditions of such fluid (temperature, etc.).

The other drawback is still associated with the harsh conditions of the operating environment: the tightness of the chamber of known volume, as mentioned above, must be ensured by a perfect fit of mechanical parts, that are still exposed to dirt and other deteriorating elements (coolant, chips, etc.).

Therefore, the main object of the present invention is to obviate the drawbacks of the prior art as described above, by providing a novel method and apparatus for checking proper clamping of workpieces.

Such monitoring and/or checking method and apparatus provide, instead of the mechanical detection of pressure in the hydraulic clamping circuit based on the position of the cylinder stem, direct pressure measurement by wireless pressure transmitters capable of detecting and continuously transmitting pressure information to the CNC machine in hidden time; they are particularly advantageous in case of multi-pallet CNC machines (i.e. having a large number of machining fixtures to be stored in a special in-machine magazine) but may be also used in single-pallet CNC machines.

The characteristics of the novel system for checking proper clamping of the workpieces on the machining fixture will be more apparent from the following description of a few embodiments, which are shown by way of example and without limitation in the accompanying drawings, in which:
- Figure 1 is a view of a typical prior art system for checking proper clamping;
- Figure 2 is a view of a typical prior art system for checking proper clamping having a pneumatic circuit incorporated in the fixture;
- Figure 3 is a view of the present system for checking proper clamping;
- Figure 4 is a diagrammatic view of the system for collecting pressure information and transmitting such information to the CNC machine.

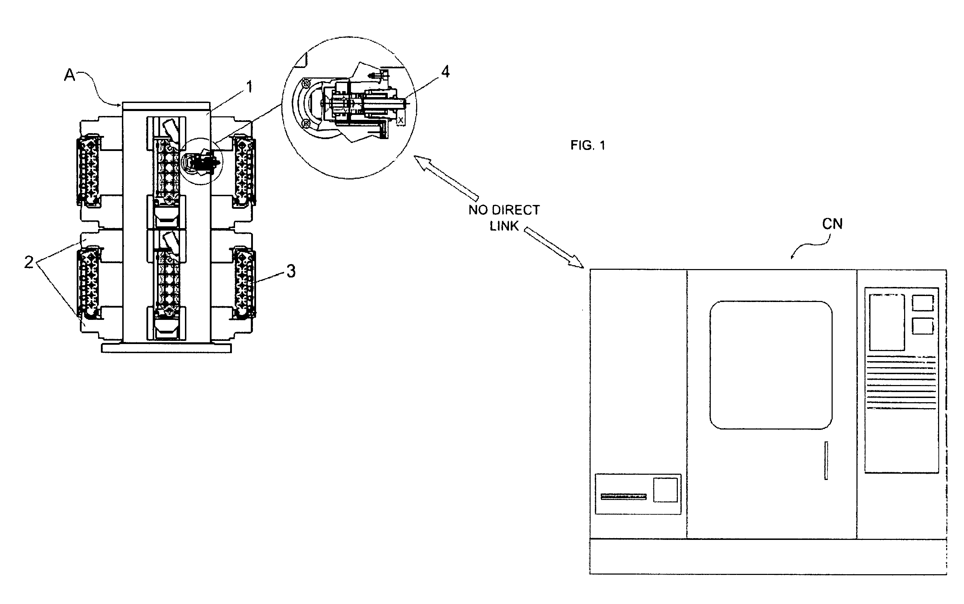

A typical prior art system for checking proper clamping of workpieces will be now described referring to Figure 1.

The machining fixture or pallet A is a steel cube 1 having various clamping fixtures attached to its faces; the workpieces 3 are attached to the cube 1 by means of the clamping fixtures 2.

The clamping process of the fixtures 2 is controlled by a hydraulic circuit formed within the cube 1; when the pressure of oil circulating in the hydraulic circuit is above a certain threshold value, the clamping fixtures 2 are properly clamping the workpieces 3.

Pressure in the hydraulic clamping circuit is detected indirectly: under the force exerted by the pressurized oil of the circuit on the stem of the cylinder 4, the latter moves from its rest position through a length x.

Prior to machining of the workpieces 3 mounted to the fixture A, the CNC machine CN drives a tracer tool close to the fixture A and the tracer tool detects the position x of the stem of the cylinder 4.

Only if the x value exceeds the threshold corresponding to the proper clamping pressure, the CNC machine CN starts processing the fixture A; otherwise processing is aborted.

There is no direct communication between the workpiece clamping devices 2 and the CNC machine CN.

As mentioned above, the typical prior art system for checking proper clamping has various shortcomings:
- the correctness of the position x of the stem of the cylinder 4 strictly depends on the environmental conditions in which the cylinder 4 operates: the presence of chips and oil might cause the cylinder to move improperly or to become stuck;
- position x checks have an adverse effect on processing time and are not frequently repeated; this is not enough to ensure proper clamping of the workpieces 3 anytime during machining.

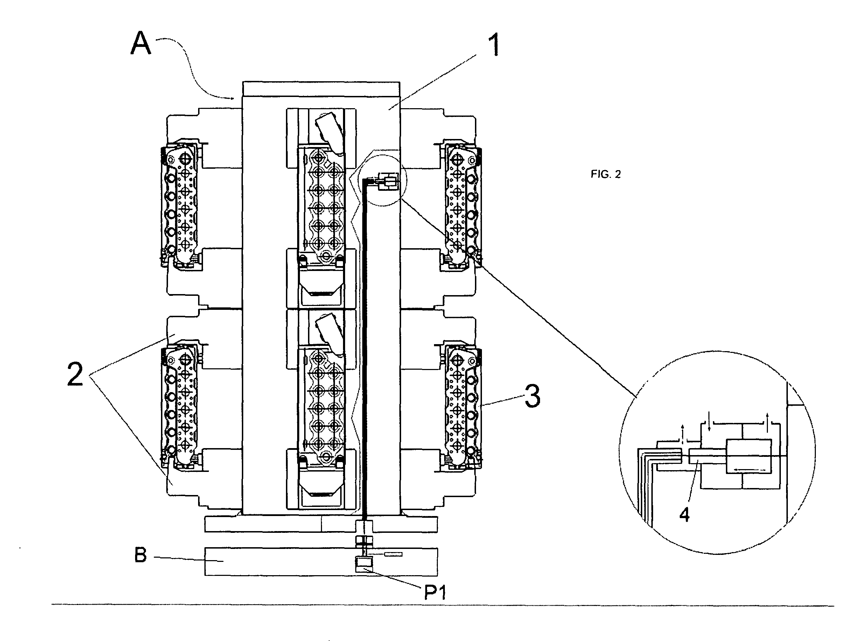

A second typical prior art system for checking proper clamping of workpieces, characterized by the provision of a pneumatic circuit incorporated in the machining fixture, will be now described referring to Figure 2.

The machining fixture or pallet A is a steel cube 1 having various clamping fixtures attached to its faces; the workpieces 3 are attached to the cube 1 by means of the clamping fixtures 2.

The clamping process of the fixtures 2 is controlled by a hydraulic circuit formed within the cube 1; when the pressure of oil circulating in the hydraulic circuit is above a certain threshold value, the clamping fixtures 2 are properly clamping the workpieces 3.

Pressure in the hydraulic circuit is detected indirectly: under the force exerted by the pressurized oil of the circuit on the stem of the cylinder 4, the latter moves from its rest position to the surface of the pneumatic chamber, thereby obstructing the circuit.

Air flow in the pneumatic circuit is stopped and the volume of air trapped in the pneumatic chamber reaches the operating pressure of the pneumatic circuit, as measured by a pressure gage P1 located in the base B of the CNC machine CN.

The PLC that supports the CNC machine CN controls the states of the pressure gage P1 and interfaces with the CN both before machining the workpieces 3 mounted to the fixture A and during actual machining.

Only if the pressure value in the pneumatic circuit exceeds the threshold the workpieces 3 are properly clamped and the CNC machine CN starts processing the fixture A; otherwise processing is aborted. If pressure in the pneumatic circuit drops below the threshold during machining, an alarm is triggered and the CNC machine CN is stopped.

While this system for checking proper clamping establishes continuous communication between the clamping devices 2 and the CNC machine CN, it still has a number of shortcomings:
- the correctness of the position of the stem of the cylinder 4 strictly depends on the environmental conditions in which the cylinder 4 operates: the presence of oil and vapors might cause the cylinder to move improperly or to become stuck;
- pressure in the chamber of known volume of the pneumatic circuit must be ensured by a perfect fit of mechanical parts, that are still exposed to a harsh environment, and hence to dirt and other deteriorating elements (coolant, chips, etc.) and is further influenced by certain ambient conditions, such as temperature, etc.;
- Proper clamping by a fixture A is only checked when the latter has been mounted to the CNC machine: no system is provided for preventively checking the condition of the machining fixtures held in the fixture magazine or being conveyed from the fixture magazine to the CNC machine.

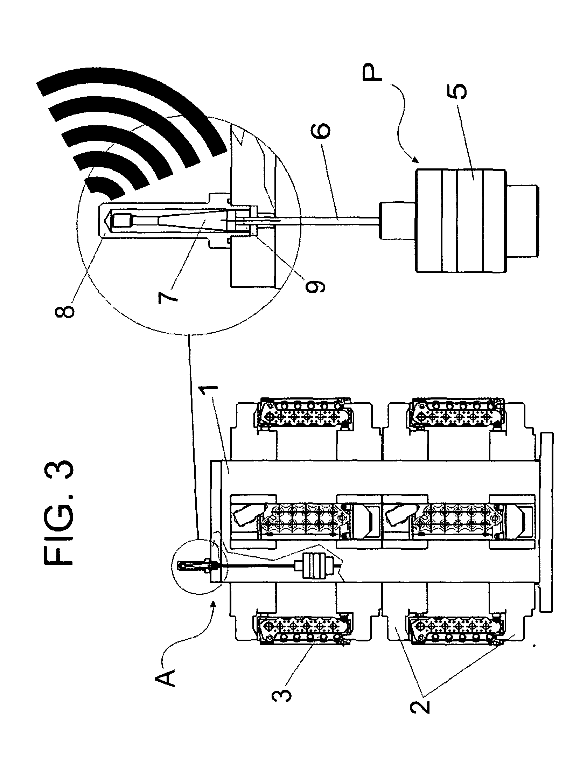

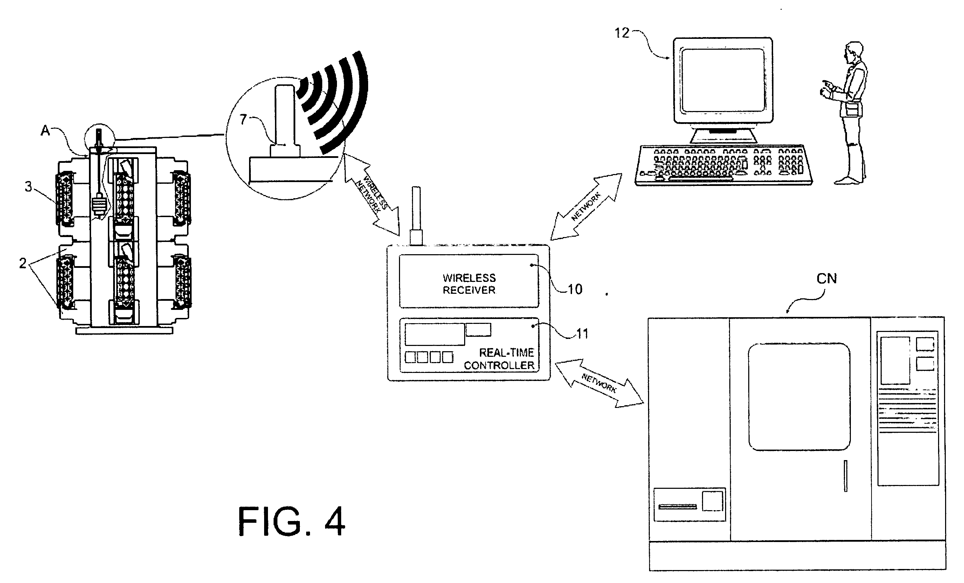

Referring to Figures 3 and 4, the method for checking proper clamping of workpieces and the pressure information receive/transmit system of the present invention will be now described, in which the pressure in the hydraulic clamping circuit is no longer measured indirectly by detecting the position x of the stem of the cylinder 4, and is measured directly by a pressure transmitter P connected to the fixture A.

In the example as shown herein, the pressure transmitter P is installed within the fixture A; nonetheless, without departure from the scope of the invention, such pressure transmitter P may be located not only within the fixture but also in the proximity thereof, provided it is kept in communication with the hydraulic clamping circuit line so as to be able of detecting the clamping pressure.

If the pressure transmitter P is installed within the cube 1, it should be equipped with a long-life battery, requiring no frequent replacement.

The pressure transmitter P is adapted for continuous detection of pressure in the hydraulic clamping circuit: thanks to such continuous pressure detection, proper clamping of workpieces 3 can be checked both prior to and during machining.

The pressure transmitter P transmits pressure information to a receiver 10 located within a few meters, by wireless means: in multi-pallet machines, the machining fixture A runs some meters when conveyed from the fixture magazine to the CNC machine CN, wherefore such information could not be transmitted over wires.

The pressure transmitter P is composed of an external enclosure 5, a cable coming out of the enclosure 5 and having an antenna 7 at its end; the antenna 7 is led out of the cube 1 through a hole 9: the antenna 7 cannot be left in the steel cube 1, because this would strongly affect the continuity of information transfer from the pressure transmitter P to the wireless receiver 10.

To prevent the oil used by the CNC machine CN from infiltrating in the fixture A and damaging the pressure transmitter P, the hole 9 and the antenna 7 are wholly covered and insulated from the outside environment by a cap 8.

In multi-pallet CNC machines CN, each fixture A, either in operation or held within the fixture magazine awaiting selection, has a pressure transmitter P with an antenna 7 , the wireless receiver 10 can handle up to 40 pressure transmitters P (and thence fixtures A) having, at the worst, a few seconds' sampling rate.

The pressure values transmitted by the various pressure transmitters P to the wireless receiver 10 are transmitted by the latter to a real time controller 11.

This real time controller 11 is designed to:
- interface with the wireless receiver 10 to receive information about proper operation of the receiver itself and of the pressure transmitters P connected thereto;
- interpreting such information to transmit instructions to the CNC machine CN.

More particularly, if the real time controller 11 receives no signal from the pressure transmitter P of the fixture A mounted to the CNC machine CN (which may happen in case of crash of the pressure transmitter) or receives a wrong signal therefrom (e.g. below the pressure threshold indicative of proper clamping), it instructs the CNC machine CN to:
- eject the fixture A, if the latter is not operating, and select another one;
- stop machining and trigger an alarm, if the fixture A is operating.

In the latter case, proper operation of the CNC machine CN can be only manually restored by an operator: before restarting the machine, a check has to be made as to define whether the alarm has been actually caused by improper clamping of workpieces 3 on the fixture A or by some different malfunctioning (e.g. malfunctioning pressure transmitter).

It is thus apparent that the system for checking proper clamping of workpieces and for receiving/transmitting data as disclosed herein, which is composed of a pressure transmitter P, a wireless receiver 10 and a real time controller 11, solves all typical prior art drawbacks; particularly, the following advantages are noticed:
- continuous check of proper clamping of workpieces in hidden time prevents any potential impact between the CNC machine CN and the workpieces 3 without affecting machine productivity;
- continuous check of proper clamping of workpieces in hidden time does not require use of mechanical parts subject to wear and operating in a harsh environment;
- continuous check of proper clamping of workpieces in hidden time occurs both when the fixture A is mounted to the CNC machine CN and when the fixture A is not mounted to the machine (e.g. when it is held in the fixture magazine or is being conveyed from the fixture magazine to the CNC machine CN), allowing for preventive maintenance of fixtures while they are not in operation;
- the data receive/transmit system connected to the one for checking for proper clamping of workpieces allows direct operation on the states of the CNC machine CN depending on the states of the fixtures A used thereby;
- connection of the real time controller 11 with a supervisor 12 allows one interface to collect all information about the operating states of all fixtures A servicing the CNC machine CN, and allows the supervisor 12 to adjust the pressure threshold indicative of proper clamping of workpieces, to perform data login procedures and statistical processing using the collected data.

## Claims

1. A method for monitoring and/or checking proper clamping of workpieces on one or more machining fixtures (A) servicing a CNC machine (CN),
**characterized in that** it deterministically and continuously checks proper clamping of workpieces (3) machined by the fixtures (A) and prevents machining of incorrectly positioned workpieces, as well as impacts between the CNC machine (CN) and the fixture (A), by:
a. direct and continuous measurement of the pressure exerted by the clamping fixtures (2) to clamp the workpieces (3) using at least one pressure transmitter (P) in communication with the hydraulic circuit line of the machining fixture (A),
b. real time wireless transmission of said detected clamping pressure to a receiver (10) which in turn communicates such information to a controller (11),
c. using said signal from the pressure transmitter (P) to instruct the CNC machine (CN) about how to proceed.

2. A method as claimed in claim 1, **characterized in that** said controller (11) instructs the CNC machine (CN) to:
a. eject the fixture (A), if the latter is not operating, and select another one;
b. stop machining and trigger an alarm, if the fixture (A) is operating,
if the controller (11) does not receive the signal from the pressure transmitter (P) of the fixture (A) or receives a pressure value below the threshold indicative of proper clamping of the workpieces (3) from said pressure transmitter (P).

3. A method as claimed in claim 1, **characterized in that** the wireless receiver (10) is situated on the CNC machine (CN).

4. An apparatus for monitoring and/or checking proper clamping of workpieces on one or more fixtures
(A) servicing a CNC machine (CN), **characterized in that** it comprises at least one pressure transmitter (P) in communication with the hydraulic clamping circuit line of said machining fixture (A) and adapted to acquire and transmit, time after time, said clamping pressure value.

5. An apparatus as claimed in claim 4,
**characterized in that** said pressure transmitter (P) comprises an external enclosure (5) and a wire (6) coming out of the enclosure (5) and having an antenna (7) at its end.

6. An apparatus as claimed in claims 4 and 5,
**characterized in that** said pressure transmitter (P) is located within the fixture (A) and the antenna (7) is led out of the cube (1) of the fixture (A).

7. An apparatus as claimed in claim 4,
**characterized in that** said pressure transmitter (P) is located in the proximity of the fixture (A) and is put in communication with the hydraulic clamping circuit for workpiece clamping pressure detection.
